# EUROPÄISCHE PATENTSCHRIFT

(11) **EP 2 417 586 B1**
(45) Veröffentlichungstag und Bekanntmachung des Hinweises auf die Patenterteilung: **03.09.2014**
(21) Anmeldenummer: 10722526.0
(22) Anmeldetag: 05.02.2010
(51) Int. Cl.: G07F 7/06, B65G 47/14

(54) **VORRICHTUNG ZUR RÜCKNAHME VON LEERGUT, INSBESONDERE KUNSTSTOFFFLASCHEN UND METALLDOSEN**
APPARATUS FOR RECOVERING EMPTY CONTAINERS, IN PARTICULAR PLASTIC BOTTLES AND METAL CANS
DISPOSITIF DE REPRISE DES VIDES, EN PARTICULIER DE BOUTEILLES EN PLASTIQUE ET DE BOÎTES MÉTAL

(30) Priorität: 09.04.2009 DE 102009017211
(43) Veröffentlichungstag der Anmeldung: 15.02.2012
(73) Patentinhaber: Envipco Holding N.V., 1015 DE Amsterdam (NL)
(72) Erfinder: HANDSCHICK, Bert, 02785 Olbersdorf (DE)
(74) Vertreter: Seewald, Jürgen
(86) Internationale Anmeldenummer: PCT/DE2010/000144
(87) Internationale Veröffentlichungsnummer: WO 2010/115389

(56) Entgegenhaltungen:
- EP-A1- 2 105 891
- DE-U1-202007 000 846
- US-A- 3 749 240
- US-A- 3 797 640
- US-A- 4 505 370

## Beschreibung

Die vorliegende Erfindung betrifft eine Vorrichtung zur Rücknahme von Leergut, insbesondere von Kunststoffflaschen und Metalldosen, gemäß dem Oberbegriff des Anspruchs 1.

Eine derartige Vorrichtung kommt u.a. in Leergut-Rücknahmeautomaten zum Einsatz. Mit Hilfe dieser Automaten wird Einweg- und Mehrweg-Leergut z.B. in Form von Flaschen und Dosen zurückgenommen. Es wird dabei zwischen Einzel-Einzugsystemen und Bulk-Einzugsystemen unterschieden.

Ein Beispiel für einen Leergut-Rücknahmeautomaten mit Einzel-Einzugsystem ist in der WO 02/12095 A1 zu finden. Bei derartigen Automaten wird das Leergut seriell nacheinander von Hand eingegeben und dann durch eine Transporteinrichtung seriell, d.h., in einer Reihe, einzeln nacheinander, an einer Erkennungseinheit vorbeigeführt, durch die das Leergut auf Formbeschaffenheit und ggf. weitere Merkmale überprüft wird.

Leergut-Rücknahmeautomaten mit Bulk-Einzugsystemen sind in der DE 10 2005 025 965 A1, der DE 10 2004 010 133 A1 und der DE 103 35 188 A1 beschrieben. Bei diesen Automaten wird zurückzugebendes Leergut nicht einzeln, d.h., Stück für Stück, eingegeben, sondern in einer Masse (Bulk), d.h., als Schüttgut. Die Eingabe erfolgt in einen Sammeleingaberaum, aus dem das Leergut durch die Transporteinrichtung heraus transportiert wird. Bei den Automaten nach dem Stand der Technik erfolgt aus dem Sammeleingaberaum heraus eine serielle Vereinzelung des Leerguts, welches in dieser Anordnung dann wie beim Einzel-Einzugsystem von der Transporteinrichtung an einer Erkennungseinheit vorbeigeführt wird, durch die das Leergut der Reihe nach einzeln erfasst wird.

Die DE 10 2006 011 193 A1 offenbart eine Vorrichtung mit einem horizontal verlaufenden Fördermittel. Es besteht aus mehreren, voneinander beabstandeten Förderriemen, die das Leergut an einer Erkennungseinheit vorbeiführen, wobei das Leergut in Förderrichtung hinter der Erkennungseinheit durch Abwurfmittel in neben dem Förderer angeordnete Sammelbehälter abgeworfen wird. Bei den Abwurfmitteln handelt es sich um mechanische Stößel, die z. B. pneumatisch angetrieben werden, und bei Aktivierung von unten nach oben durch die Abstände zwischen den Förderriemen hindurch stoßen und so das Leergut von den Förderriemen entfernen. Die Aktivierung der Abwurfmittel erfolgt aufgrund der in der Erkennungseinheit erfassten Daten. Ist z. B. eine Dose erkannt worden, wird das dem Sammelbehälter für Dosen zugeordnete Abwurfmittel aktiviert. Diese Aktivierung erfolgt seriell.

Die oben beschriebenen Bulk-Einzugsysteme haben den Vorteil, dass die Eingabe des Leerguts in die Vorrichtung für einen Benutzer schnell und unproblematisch ist, da das Leergut nicht Stück für Stück einzeln einzugeben ist. Nachteilig ist jedoch, dass der Durchsatz durch die Vorrichtung aufgrund der nach der Eingabe erfolgenden, seriellen Vereinzelung trotz teilweise hoher Einzeltransportgeschwindigkeiten des Leerguts zu viel Zeit in Anspruch nimmt.

Dieser Nachteil wird mit einer Vorrichtung zur Rücknahme von Leergut vermieden, die in der US 4 505 370 A beschrieben ist. Diese Vorrichtung weist ein Fördermittel in Form eines Steilförderers auf, der das Leergut auf Mitnehmern aus einem Sammeleingaberaum heraus parallelisiert und Detektoren, die zu einer Erkennungseinheit gehören, in einer Feldanordnung zuführt. Am oberen Ende des Steilförderers wird das nach den Kriterien "magnetisch" und "nicht magnetisch" detektierte Leergut in einen Schacht bzw. auf ein Förderband abgeworfen und einer Zerkleinerungseinrichtung zugeführt. Das bepfandete Leergut wird zuvor gewogen, um das an einen Kunden auszuzahlende Pfandgeld zu ermitteln. Aufgrund der parallelisierten Förderung des Leerguts wird der Durchsatz durch die Vorrichtung erhöht.

Aufgabe der vorliegenden Erfindung ist es, eine Vorrichtung zur Rücknahme von Leergut zur Verfügung zu stellen, mit einer erhöhten Durchsatzleistung.

Diese Aufgabe wird erfindungsgemäß mit einer Vorrichtung gelöst, die die Merkmale des Anspruchs 1 aufweist.

Der Abtransport des Leerguts aus dem Sammeleingaberaum erfolgt parallelisiert, wodurch es Detektoren, die zu einer Erkennungseinheit gehören, in einer Feldanordnung zugeführt wird. Feldanordnung soll bedeuten, dass das Leergut auf dem Fördermittel in Förderrichtung gesehen nicht nur der Reihe nach übereinander bzw. hintereinander, sondern gleichzeitig auch nebeneinander angeordnet ist. Es versteht sich, dass das Fördermittel dazu so breit ausgeführt sein muss, dass es zumindest zwei Stücke Leergut nebeneinander aufnehmen kann.

Die Parallelisierung bzw. parallele Behandlung des Leerguts wird im weiteren Durchlauf durch die erfindungsgemäße Vorrichtung konsequent beibehalten. Dazu sind die Abwurfmittel in zumindest zwei Reihen auf verschiedenen Höhen quer über die gesamte Breite des Steilförderers angeordnet. Die Anzahl der Reihen von Abwurfmitteln richtet sich nach der Anzahl unterschiedlichen Leerguts. Wenn nur Leergut aus zwei verschiedenen Materialien, z. B. PET-Flaschen und Metalldosen, angenommen wird, sind zwei Reihen von Abwurfmittel ausreichend. Jeweils in Höhe der Abwurfmittel sind vor dem Steilförderer Förderbänder angeordnet, die der Aufnahme des abgeworfenen Leerguts und dem parallelen Weitertransport des Leerguts in neben dem Steilförderer angeordnete Sammelbehälter dienen.

Aufgrund der oben beschriebenen Parallelisierung auch der Abwurfmittel, können z. B. drei nebeneinander auf dem Steilförderer liegende Metalldosen gleichzeitig auf das zugeordnete Förderband abgeworfen und von diesem zu dem entsprechenden Sammelbehälter gefördert werden.

Vorteilhafte Ausgestaltungen der Erfindung ergeben sich aus den Unteransprüchen.

Die Erfindung wird nachstehend anhand von Ausführungsbeispielen näher erläutert. In der dazugehörigen Zeichnung zeigt in schematischer Weise:
- Fig. 1: eine Seitenansicht einer erfindungsgemäßen Vorrichtung in einer ersten Ausführungsform,
- Fig. 2: eine Vorderansicht der Darstellung gemäß Fig. 1 unter Weglassung von die Sicht behindernden Bauteilen,
- Fig. 3: eine ausschnittsweise Vorderansicht eines Steilförderers einer erfindungsgemäßen Vorrichtung in einer zweiten Ausführungsform,
- Fig. 4: eine Seitenansicht gemäß Fig. 3,
- Fig. 5: eine Einzelheit A gemäß Fig. 4 in vergrößerter Darstellung, und
- Fig. 6: eine perspektivische, ausschnittsweise Darstellung des Steilförderers mit eingezeichnetem Detektionsfeld einer zu einer Erkennungseinheit gehörenden Kamera.

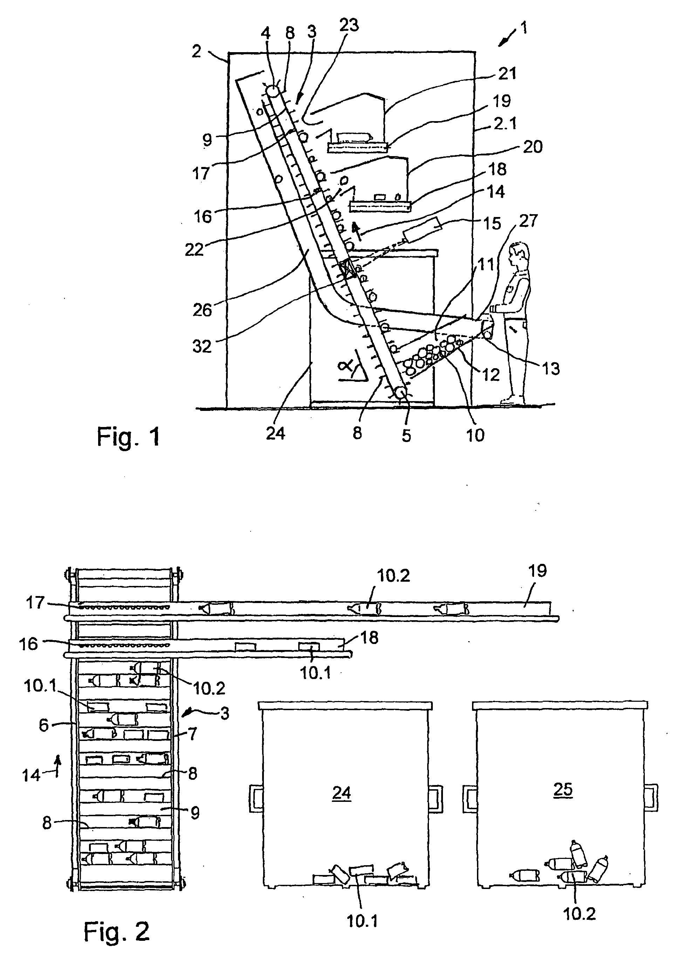

Die in der Zeichnung dargestellte Vorrichtung 1 ist für die Rücknahme von PET-Flaschen 10.2 und Metalldosen 10.1 ausgelegt. Sie weist eine Umhausung, z. B. in Form eines Containers 2 auf, in dem ein Steilförderer 3 angeordnet ist. Der Anstellwinkel α des Steilförderers 3 liegt bei diesem Ausführungsbeispiel in einem Bereich von 60° bis 85°. Er weist auf seinen beiden Längsseiten um eine obere Umlenkrolle 4 und eine untere Umlenkrolle 5 umlaufende Kettentriebe 6, 7 (Fig. 2) auf. Zumindest die obere Umlenkrolle 4 ist motorisch angetrieben. An den Kettentrieben 6, 7 sind quer zur Förderrichtung (Pfeil 14 in Fig.1 und 2) und in im wesentlichen gleichen Abständen voneinander angeordnete, leistenförmige Mitnehmer 8 befestigt. Hinter dem Obertrum des Steilförderers 3 ist eine ortsfeste Anlagefläche 9 angeordnet, die ein Durchfallen von auf den Mitnehmern 8 aufliegendem Leergut 10 nach hinten verhindern soll.

Am unteren Ende des Steilförderers 3 ist ein nach oben offener, trichterförmiger Sammeleingaberaum 11 angeordnet. Der Boden 12 des Sammeleingaberaums 11 verläuft zum Steilförderer 3 hin nach unten geneigt. Der Sammeleingaberaum 11 erstreckt sich durch die Vorderwand 2.1 des Containers 2 nach außen, wodurch eine nach oben offene Eingabeöffnung 13 gebildet ist. In diese Eingabeöffnung 13 wird Leergut 10 durch Ausschütten, z, B, aus einer Tasche, gewissermaßen als Schüttgut, eingegeben. Aufgrund der Neigung des Bodens 12 des Sammeleingaberaums 11 rollt bzw. ruscht das Leergut 10 unter Schwerkraftwirkung zum Steilförderer 3 hin. Die Mitnehmer 8 des Steilförderers 3 durchlaufen den Sammeleingaberaum 11, wodurch das Leergut 10, auf den Mitnehmern 8 aufliegend, mitgenommen wird. Die Mitnehmer 8 sind quer zur Förderrichtung 14 so breit, dass mindestens zwei Stücke Leergut 10 nebeneinander auf einem Mitnehmer 8 zum Liegen kommen können.

Der Steilförderer 3 fördert das Leergut 10 aus dem Sammeleingaberaum 11 heraus nach oben an einer zu einer nicht dargestellten Erkennungseinheit gehörenden Kamera 15 und einem Metalldetektor 32 vorbei (Fig. 1). Bei der Kamera 15 handelt es sich um eine Zeilenkamera, der eine nicht dargestellte Halogenstrahlungsquelle zur Beleuchtung des Leerguts 10 im Auflicht zugeordnet ist. Das Detektionsfeld der Kamera 15 umfasst mindestens die gesamte Breite des Steilförderers 3. Sie ist auf die spektrale Reflexion von Polyethylen (PET) progammiert, so dass sie auf dem Steilförderer 3 liegendes Leergut 10 aus PET erkennt. Gleichzeitig erkennt sie auch die Form und die Lage des Leerguts 10 auf dem Steilförderer 3. Die Kamera 15 steht über eine nicht dargestellte Datenleitung mit einer nicht dargestellten Steuereinheit in Verbindung.

Da die Kamera 15 zwar dafür ausgelegt ist, die Form und die Lage von Metalldosen 10.1 zu erkennen, aber nicht deren Material, ist, wie oben erwähnt, zusätzlich zu der Kamera 15 der Metalldetektor 32 vorgesehen. Dabei handelt es sich um eine Vielzahl von Sensoren, die in einer Reihe quer zur Förderrichtung 14 hinter der Anlagefläche 9 angeordnet sind. Sie bilden einzelne Meßpunkte, die aufgrund ihrer Vielzahl eine Ortsauflösung ermöglichen, also zusätzlich zur Kamera 15 die Lage einer Metalldose 10.1 auf dem Steilförderer 3 detektieren. Insbesondere detektieren sie aber, ob es sich bei dem Leergut 10 um solches aus Metall handelt oder nicht. Der Metalldetektor 32 steht ebenfalls über eine nicht dargestellte Datenleitung mit der Steuereinheit in Verbindung. Wenn die Metalldosen 10.1 aus Aluminium bestehen, werden Wirbelstromsensoren als Metalldetektor 32 eingesetzt.

In Förderrichtung 14 oberhalb der Kamera 15 und des Metalldetektor 32 sind zwei quer zur Förderrichtung 14 angeordnete Reihen von Luftdüsen 16 und 17 angeordnet, die sich über die gesamte Breite des Steilförderers 3 erstrecken. Im Bereich der Luftdüsen 16, 17 ist die Anlagefläche 9 geschlitzt, so dass die Ausgänge der Luftdüsen 16, 17 Zugang zu dem Bereich zwischen den Mitnehmern 8 haben.

Die oben erwähnte, nicht dargestellte Steuereinheit steuert die Luftdüsen 16, 17 entsprechend den von der Kamera 15 und dem Metalldetektor 32 erfassten Daten (Art des Leerguts 10 und Lage auf dem Steilförderer 3) an. Durch Ansteuerung der unteren Reihe von Luftdüsen 16 werden auf den Mitnehmern 8 aufliegende Metalldosen 10.1 gezielt vom Steilförderer 3 weggeblasen, d.h., die Luftdüsen 16, die hinter der zu entfernenden Metalldose 10.1 bzw. den zu entfernenden Metalldosen 10.1 angeordnet sind, geben einen kurzen Luftstoß ab, wodurch die Metalldosen 10.1 vom Steilförderer 3 abgeworfen werden. Durch Ansteuerung der oberen Reihe von Luftdüsen 17 erfolgt entsprechend eine gezielte Entfernung von PET-Flaschen 10.2 vom Steilförderer 3.

Im Bereich der Luftdüsen 16, 17 ist jeweils ein Förderband 18,19 angeordnet, das sich jeweils quer zum Steilförderer 3 erstreckt. Das Leergut 10 wird, bezogen auf die Darstellung gemäß Fig. 1, von den Luftdüsen 16 bzw. 17 nach schräg vorn und oben vom Steilförderer 3 weggeblasen. Zumindest im Bereich des Steilförderers 3 weisen die Förderbänder 18, 19 eine Umhausung 20 bzw. 21 auf, die zum Steilförderer 3 hin eine Zugangsöffnung 22 bzw. 23 aufweisen. Durch diese Zugangsöffnungen 22, 23 wird das Leergut 10 in die Behausung 20 bzw. 21 geblasen und landet sicher auf den Förderbändern 18 bzw. 19.

Das untere Förderband 18 fördert Metalldosen 10.1 in einen ersten Sammelbehälter 24, während das darüber angeordnete Förderband 19 PET-Flaschen 10.2 in einen zweiten Sammelbehälter 25 fördert.

Von der Kamera 15 und dem Metalldetektor 32 nicht erkanntes Leergut 10 wird von dem Steilförderer 3 an den Luftdüsen 16, 17 vorbei weiter nach oben gefördert und gelangt dort nach Passieren der oberen Umlenkrolle 4 in einen Rückgabefallschacht 26. Dieser Rückgabefallschacht 26 führt durch die Vorderwand 2.1 des Containers 2 neben dem Sammeleingaberaum 11 nach außen, so dass dort eine Entnahmeöffnung 27 gebildet ist. Aus dieser Entnahmeöffnung 27 kann von der Vorrichtung 1 nicht zurückgenommenes Leergut 10 wieder entnommen werden.

Neben der Eingabeöffnung 13 und der Entnahmeöffnung 27 können in bzw. an der Vorderwand 2.1 des Containers 2 weitere Elemente angeordnet sein, so z. B. ein Display (nicht dargestellt) und eine Ausgabe (nicht dargestellt) für einen Pfandbeleg.

Die Vorrichtung 1 wurde oben stehend für die Rücknahme von PET-Flaschen 10.2 und Metalldosen 10.1 beschrieben. Natürlich kann auch anderes bzw. weiteres Leergut 10 mit dieser Vorrichtung 1 zurückgenommen werden. Wenn zusätzlich zu den PET-Flaschen 10.2 und den Metalldosen 10.1 z. B. Kunststoffflaschen aus PVC zurückgenommen werden sollen, so ist es lediglich erforderlich, eine weitere Luftdüsenreihe, ein weiteres Förderband und einen weiteren Sammelbehälter vorzusehen. Die Kamera15 muß dann zusätzlich auf das Erkennen von PVC programmiert sein.

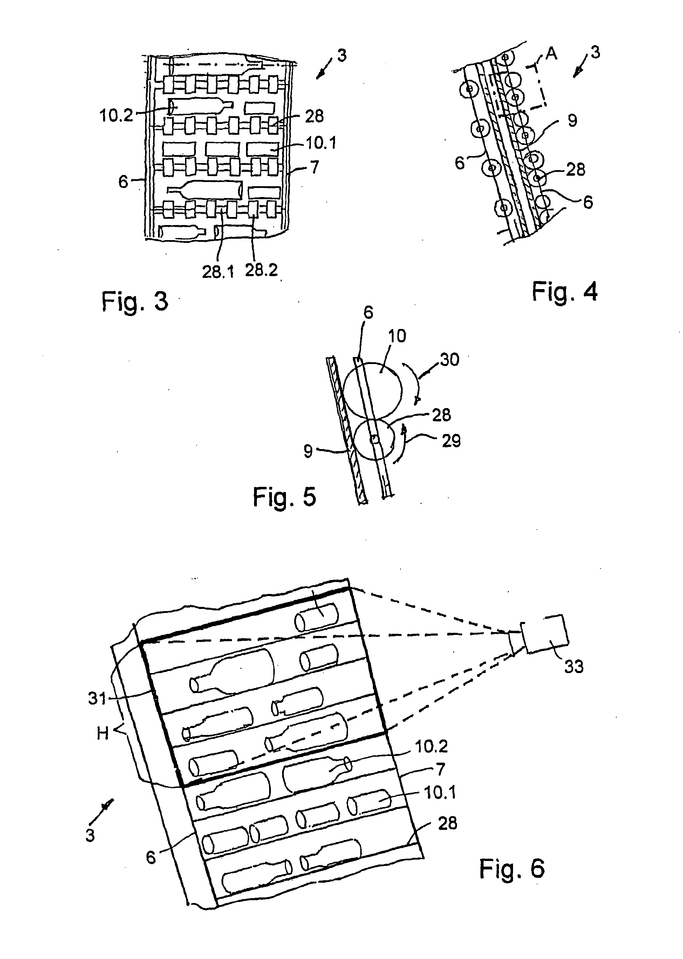

Mit der Vorrichtung 1 gemäß dem oben stehend erläuterten Ausführungsbeispiel kann Leergut 10 nach seiner Art, Metalldose 10.1, PET-Flaschen 10.2 etc. zurückgenommen werden. Sollen zusätzlich dazu noch bestimmte Aufdrucke, z.B. Barcodes, Sicherheitszeichen etc., auf dem Umfang des Leerguts 10 erfasst werden, so ist die Vorrichtung 1 zu modifizieren. Bei dieser modifizierten Ausführungsform hat die Vorrichtung 1 prinzipiell den gleichen Aufbau wie die in den Figuren 1 und 2 dargestellte Vorrichtung. Die Unterschiede zwischen den beiden Ausführungsbeispielen werden nachstehend anhand der Figuren 3 bis 6 erläutert. Dabei werden für gleiche oder funktionsgleiche Bauteile die Bezugszeichen des ersten Ausführungsbeispiels übernommen.

Der Steilförderer 3 weist auch bei diesem zweiten Ausführungsbeispiel auf seinen beiden Längsseiten umlaufende Kettentriebe 6, 7 auf, an denen im Unterschied zum ersten Ausführungsbeispiel quer zur Förderrichtung 14 angeordnete Rollen 28 drehbar gelagert sind. Die Rollen 28 sind in gleichmäßigen Abständen auf den Umfang verteilt an den Kettentrieben 6 und 7 gelagert und weisen sich abwechselnde Abschnitte 28.1, 28.2 kleineren und größeren Durchmessers auf. Die Rollen 28 laufen zumindest am Obertrum der Kettentriebe 6, 7 auf einer starren, ortsfesten Anlagefläche 9, wodurch sie durch Reibschluss drehangetrieben werden.

Der Anstellwinkel α des Steilförderers 3 kann bei dieser Ausführungsform maximal 90° betragen. In diesem Falle müssten die Rollen 28 einen Durchmesser haben, der größer als der größte Durchmesser des zu fördernden Leerguts 10 ist, damit das Leergut 10 nicht nach vorn von den Rollen 28 herunter fallen kann.

Die Rollen 28 des Steilförderers 3 durchlaufen den Sammeleingaberaum 11, wodurch Leergut 10, auf den Abschnitten 28.2 größeren Durchmessers der Rollen 28 aufliegend, mitgenommen wird. Die Rollen 28 sind quer zur Förderrichtung 14 so breit, dass mindestens zwei Stücke Leergut 10 auf einer Rolle 28 zum Liegen kommen können, wie z. B. aus Fig. 3 hervorgeht.

Beim Transport des Leerguts 10 durch den Steilförderer 3 laufen die Rollen 28 auf der Anlagefläche 9 ab, wodurch sie einen Drehantrieb in Gegenuhrzeigerichtung erhalten, wie in Fig. 3 durch einen Pfeil 29 dargestellt ist. Das auf den Rollen 28 lagernde Leergut 10 wird dadurch in Uhrzeigerrichtung angetrieben, wie in Fig. 4 durch einen Pfeil 30 angedeutet ist. Aufgrund dieser Drehrichtung wird das Leergut 10 an die Anlagefläche 9 angedrückt, so dass es nicht von den Rollen 28 herunterfallen kann.

Der Steilförderer 3 führt das Leergut 10 auch in diesem Ausführungsbeispiel an einer zu einer nicht dargestellten Erkennungseinheit gehörenden Kamera 33 und an einem Metalldetektor 32 vorbei, wie in Fig. 6 dargestellt ist. Bei dieser Kamera 33 handelt es sich um eine multisensorische Kamera, d.h., diese Kamera 33 kann sowohl Bilder aufnehmen als auch spektral analysieren. Alternativ dazu kann, um Aufdrucke auf dem Leergut 10 erfassen zu können, neben der Kamera 15 des ersten Ausführungsbeispiels (Zeilenkamera) eine zweite Kamera (Matrixkamera) eingesetzt werden.

Die Kamera 33 hat ein flächenhaftes Detektionsfeld 31. Dieses Detektionsfeld 31 umfasst die ganze Breite des Steilförderers 3, und die Höhe H des Detektionsfeldes 31 ist so gewählt, dass sie mindestens der abgerollten Mantelfläche des Leerguts 10 mit dem größten Durchmesser entspricht. Dadurch wird erreicht, dass alle auf der Mantelfläche des Leerguts 10 befindlichen Kennzeichen, Barcodes und sonstige bildliche Merkmale sicher erfasst werden können. Die Kamera 33 ist mit entsprechender Funktionsbeleuchtung unter einem bestimmten Winkel und in einem definierten Abstand über dem Steilförderer 3 angeordnet und kann somit während des Aufwärtstransports des rotierenden Leerguts 10 alle auf dessen Umfang vorhandenen Zeichen etc: optoelektronisch in Echtzeit erfassen. Zusätzlich erfasst die Kamera 33 PET-Flaschen 10.2, sowie die Lage des Leerguts 10 auf dem Steilförderer 3. Das Material der Metalldosen 10.1 sowie deren Lage wird wiederum durch den Metalldetektor 32 erfasst.

Der Abwurf des Leerguts 10 sowie sein Abtransport in die Sammelbehälter 24, 25 erfolgt wie beim ersten Ausführungsbeispiel.

## Patentansprüche

1. Vorrichtung zur Rücknahme von Leergut, insbesondere von Kunststoffflaschen und Metalldosen, bei der ein Fördermittel das Leergut aus einem Sammeleingaberaum (Bulkeingabe) an zu einer Erkennungseinheit gehörenden Detektoren vorbeiführt, und in Förderrichtung hinter der Erkennungseinheit sich quer über die gesamte Breite des Fördermittels erstreckende Abwurfmittel zum gezielten Entfernen des Leerguts vom Fördermittel angeordnet sind, wobei das als Steilförderer (3) ausgeführte Fördermittel das Leergut (10) auf Mitnehmern (8, 28) aus dem Sammeleingaberaum (11) heraus parallelisiert und den Detektoren (15, 32, 33) in einer Feldanordnung zuführt, **dadurch gekennzeichnet, dass** die Abwurfmittel (16, 17) sich in zumindest zwei Reihen auf verschiedenen Höhen quer über die gesamte Breite des Steilförderers (3) erstrecken, und jeweils in Höhe der Abwurfmittel (16, 17) vor dem Steilförderer (3) Förderbänder (18, 19) angeordnet sind, die der Aufnahme des abgeworfenen Leerguts (10) und dem Weitertransport des Leerguts (10) in neben dem Steilförderer (3) angeordnete Sammelbehälter (24, 25) dienen.

2. Vorrichtung nach Anspruch 1, **dadurch gekennzeichnet, dass** die Abwurfmittel als mit Druckluft ansteuerbare Luftdüsen (16, 17) ausgeführt sind.

3. Vorrichtung nach Anspruch 1 oder 2, **dadurch gekennzeichnet, dass** die Förderbänder (18, 19) im Bereich der Abwurfmittel (16,17) eine Umhausung (20, 21) mit jeweils einer zum Steilförderer (3) weisenden Zugangsöffnung (22, 23) aufweisen.

4. Vorrichtung nach einem der vorhergehenden Ansprüche, **dadurch gekennzeichnet, dass** der Steilförderer (3) eine Anlagefläche (9) für das Leergut (10) aufweist, und die Mitnehmer (8, 28) beidseitig an um die Anlagefläche (9) umlaufenden Kettentrieben (6, 7) gelagert sind.

5. Vorrichtung nach Anspruch 4, **dadurch gekennzeichnet, dass** die Mitnehmer aus Rollen (28) gebildet sind, die beidseitig an den Kettentrieben (6, 7) drehbar gelagert sind.

6. Vorrichtung nach Anspruch 5, **dadurch gekennzeichnet, dass** der Drehantrieb der Rollen (28) durch Reibschluß mit der Anlagefläche (9) erfolgt.

7. Vorrichtung nach einem der vorhergehenden Ansprüche, **dadurch gekennzeichnet, dass** der Steilförderer (3) einen Anstellwinkel α von 60° bis 85° hat.

## Claims

1. Apparatus for recovering empty containers, in particular plastic bottles and metal cans, in which a conveying means guides the empty containers from a collective input compartment (bulk input) past detectors belonging to an identifying unit, and there are arranged, after the identifying unit in the direction of conveyance, discharging means, which extend transversely over the entire width of the conveying means, for the selective removal of the empty containers from the conveying means, wherein said conveying means, which is designed as an inclined conveyor (3), takes the empty containers (10) out of the collective input compartment (11) in a parallel manner on entraining means (8, 28) and feeds them to the detectors (15, 32, 33) in a field arrangement, **characterised in that** the discharging means (16, 17) extend transversely over the entire width of the inclined conveyor (3) in at least two rows at different heights, and there are arranged in front of said inclined conveyor (3), at the height of the discharging means (16, 17) in each case, conveyor belts (18, 19) which serve to receive the discharged empty containers (10) and to transport said empty containers (10) onwards into collecting receptacles (24, 25) arranged beside the inclined conveyor (3).

2. Apparatus according to Claim 1,
**characterised in that** the discharging means are designed as air nozzles (16, 17) which can be activated by means of compressed air.

3. Apparatus according to Claim 1 or 2,
**characterised in that** the conveyor belts (18, 19) have, in the region of the discharging means (16, 17), an enveloping housing (20, 21) having, in each case, an access aperture (22, 23) which points towards the inclined conveyor (3).

4. Apparatus according to one of the preceding claims,
**characterised in that** the inclined conveyor (3) has a contact surface (9) for the empty containers (10), and the entraining means (8, 28) are mounted, on both sides, on chain drives (6, 7) which circulate around the contact surface (9).

5. Apparatus according to Claim 4,
**characterised in that** the entraining means are formed from rollers (28) which are rotatably mounted, on both sides, on the chain drives (6, 7).

6. Apparatus according to Claim 5,
**characterised in that** the rotational driving of the rollers (28) takes place as a result of frictional engagement with the contact surface (9).

7. Apparatus according to one of the preceding claims,
**characterised in that** the inclined conveyor (3) has a pitch angle α of 60° to 85°.

## Revendications

1. Dispositif de retour d'emballages vides, en particulier de bouteilles en matière artificielle et de boîtes métalliques, dans lequel un moyen de convoyage fait passer les emballages vides provenant d'un espace de collecte en vrac devant des détecteurs appartenant à une unité de reconnaissance et dans lequel des moyens d'éjection servant à enlever les emballages vides du moyen de convoyage s'étendent transversalement sur toute la largeur de celui-ci, le moyen de convoyage conçu comme bande transporteuse inclinée (3) évacuant les emballages vides de l'espace de collecte en vrac en les parallélisant sur des entraîneurs (8, 28) pour les amener aux détecteurs (15, 32, 33) disposés en champ, **caractérisé en ce que** les moyens d'éjection (16, 17) s'étendent au moins en deux rangées, à des hauteurs différentes, transversalement sur toute la largeur de la bande transporteuse inclinée (3) et **en ce que** des convoyeurs à courroie (18, 10) sont disposés respectivement à la même hauteur que les moyens d'éjection (16, 17), en amont de la bande transporteuse inclinée (3), convoyeurs à courroie qui servent à recevoir les emballages vides (10) éjectés et à les réexpédier dans des récipients collecteurs (24, 25) disposés à côté de la bande transporteuse inclinée (3).

2. Dispositif suivant la revendication 1, **caractérisé en ce que** les moyens d'éjection sont conçus sous forme de buses d'air (16, 17) pouvant être commandées par air comprimé.

3. Dispositif suivant la revendication 1 ou 2, **caractérisé en ce que,** dans la zone des moyens d'éjection (16, 17), les convoyeurs à courroie (18, 19) présentent une enceinte (20, 21) avec respectivement une ouverture d'accès (22, 23) tournée vers la bande transporteuse inclinée.

4. Dispositif suivant une quelconque des revendications précédentes, **caractérisé en ce que** la bande transporteuse inclinée (3) présente une face d'appui (9) pour les emballages vides (10) et **en ce que** les entraîneurs (8, 28) sont logés sur les deux côtés de transmissions par chaîne (6, 7) tournant autour de la surface d'appui (9).

5. Dispositif suivant la revendication 4, **caractérisé en ce que** les entraîneurs sont constitués par des galets (28) qui sont logés mobiles sur les deux côtés des transmissions par chaîne (6, 7).

6. Dispositif suivant la revendication 5, **caractérisé en ce que** l'entraînement en rotation des galets (28) a lieu par friction avec la face d'appui (9).

7. Dispositif suivant une quelconque des revendications précédentes, **caractérisé en ce que** la bande transporteuse inclinée (3) présente un angle d'inclinaison de 60° à 85°.
